# EUROPEAN PATENT SPECIFICATION

(11) **EP 2 804 242 B1**
(45) Date of publication and mention of the grant of the patent: **08.08.2018**
(21) Application number: 13187596.5
(22) Date of filing: 07.10.2013
(51) Int. Cl.: H01M 4/505, H01M 4/525, H01M 10/052, H01M 10/0569, C01G 53/00, H01M 10/0525

(54) **Rechargeable lithium battery comprising a lithium nickel cobalt manganese composite oxide cathode and an ethylene carbonate based electrolyte**
Wiederaufladbare Lithiumbatterie umfassend eine Kathode von Lithium-Nickel-Cobalt-Mangan-Kompositoxid und einen Ethylenkarbonatbasierten Elektrolyt
Batterie au lithium rechargeable comprenant une cathode d'oxyde composite de lithium nickel cobalt manganèse et un électrolyte à base de carbonate d'éthylène

(30) Priority: 14.05.2013 US 201361823367 P; 24.09.2013 US 201314035912
(43) Date of publication of application: 19.11.2014
(73) Proprietor: Samsung SDI Co., Ltd., Yongin-si, Gyeonggi-do (KR)
(72) Inventor: Kim, Seung-Mo, Gyeonggi-do (KR)
(74) Representative: Mounteney, Simon James

(56) References cited:
- EP-A1- 0 872 450
- EP-A1- 1 508 934
- EP-A2- 1 521 317
- JP-A- 2000 048 820
- US-A1- 2005 202 316
- US-A1- 2010 099 018
- US-A1- 2011 101 924
- Anonymous: "1,2-Butylene carbonate - Wikipedia", , 21 March 2013 (2013-03-21), XP055313084, Retrieved from the Internet: URL:https://en.wikipedia.org/w/index.php?t itle=1,2-Butylene_carbonate&oldid=54582381 1 [retrieved on 2016-10-21]

## Description

### BACKGROUND OF THE INVENTION

### (a) Field of the Invention

This disclosure relates to a positive active material for a rechargeable lithium battery, a method of preparing the same, and a rechargeable lithium battery including the same.

### (b) Description of the Related Art

Lithium rechargeable batteries have recently drawn attention as a power source for small portable electronic devices. The lithium rechargeable batteries use an organic electrolyte solution and thereby, have twice as high a discharge voltage as a conventional battery using an alkali aqueous solution and accordingly, high energy density.

These rechargeable lithium batteries are used by injecting an electrolyte into a battery cell including a positive electrode including a positive active material that can intercalate and deintercalate lithium and a negative electrode including a negative active material that can intercalate and deintercalate lithium.

As for the positive active material, LiCoO₂ has been widely used but has a problem of capacity limit and safety. Accordingly, development of an alternative material is actively being researched.

Since LiCoO₂ has stable electrochemical characteristics, LiNiO₂ has high-capacity, and LiMnO₂ has excellent thermal stability and a low cost, research on a Co-Ni-Mn three component-based lithium metal composite oxide (hereinafter, "NCM") is made to combine these advantages.

The NCM has different characteristics depending on a composition ratio among Co, Ni, and Mn. In other words, when the Mn is included in a higher ratio, safety is improved, when the Co is included in a higher ratio, output characteristic is improved, and when the Ni is included in a higher ratio, capacity characteristic is improved.

Recently, a positive active material having high specific capacity in a rechargeable lithium battery for xEv for increasing energy density per weight and thus, a mileage has drawn attention as an important issue

Accordingly, active research has been made on a Ni-rich positive electrode material prepared by including Ni in a higher content in NCM and specifically, NCM111 (30% of Ni) has specific capacity of 150mAh/g, NCM523 (50% of Ni) of 160mAh, NCM622 (60% of Ni) of 170mAh/g, NCM75105 (75% of Ni) of 180mAh/g, and NCM85105 (85% of Ni) of 190mAh/g depending on the content of Ni. In other words, as NCM includes Ni in a higher ratio, specific capacity of the active material is increased. However, when the active material includes Ni in a higher content, air in a firing atmosphere needs to be controlled, which brings about a problem of increasing a manufacturing cost and the content of remaining lithium such as Li₂CO₃ and the like. This remaining lithium may generate gas, and the generated gas may increase resistance of a battery and deteriorate its cycle-life. When Ni is included in a higher content, cation mixing occurs and aggravates capacity deterioration of a battery in terms of the structure of the active material. The ICP analysis of a negative electrode and an electrolyte in this deteriorated battery cell shows severe elution of Ni. Accordingly, required is an electrolyte capable of decreasing of gas generation and controlling deterioration of cycle-life caused by the Ni-rich high-capacity positive active material.
US 2005/202316 A1 relates to a lithium secondary battery including a positive electrode comprising a combination of positive active materials, including NCM with a high nickel content. US 2011/101924 A1 relates to an electrolytic solution for a lithium battery including a positive electrode having a nickel-cobalt-manganese based active material. The electrolytic solution includes a non-aqueous organic solvent and a lithium salt. The non-aqueous organic solvent includes ethylene carbonate and dimethyl carbonate.

### SUMMARY OF THE INVENTION

The present invention provides a rechargeable lithium battery having high temperature cycle-life characteristics, when a NCM positive active material having high-capacity and including nickel in a high content is used for a positive electrode. The features of the present invention are described in claims 1 to 4.

One embodiment of the present invention provides a rechargeable lithium battery that includes a positive electrode including a positive active material, a negative electrode including a negative active material, and an electrolyte including a lithium salt and a non-aqueous organic solvent, wherein the positive active material includes a nickel-based composite oxide represented by the following Chemical Formula 1, the non-aqueous organic solvent consists of ethylene carbonate, dimethyl carbonate and ethylmethyl carbonate, wherein the ethylene carbonate is included in an amount of 10 volume% based on the total amount of the non-aqueous organic solvent, the dimethyl carbonate is included in an amount of 45 volume% based on the total amount of the non-aqueous organic solvent, and the ethylmethyl carbonate is included in an amount of 45 volume% based on the total amount of the non-aqueous organic solvent.

[Chemical Formula 1] LiNixCoyMnzO₂

In the above Chemical Formula 1, 0.65≤x≤0.85, 0.05<y<0.25, 0.03<z <0.2, and x+y+z=1.

In the nickel-based composite oxide represented by the above Chemical Formula 1, x:y:z may be 0.65:0.20:0.15, 0.75:0.10:0.15, or 0.85:0.10:0.05.

Other embodiments of the present invention are described in the detailed description.

A NCM positive active material having high-capacity and including nickel in a high content is used for a positive electrode and thus, decreases gas generation and realizes a rechargeable lithium battery having excellent cycle-life characteristic at a high temperature.

### BRIEF DESCRIPTION OF THE DRAWINGS

FIG. 1 is a schematic view showing a rechargeable lithium battery according to one embodiment.
FIG. 2 is a schematic view showing a PHEV prismatic cell according to one embodiment.
FIG. 3 is a graph showing electrolytes having each solvent composition according to Example 1, Reference Examples 1 to 7 and Comparative Examples 1 to 5.
FIG. 4 is a contour plot mapping 45°C cycle-life characteristics of the electrolytes having each solvent composition according to Example 1, Reference Examples 1 to 7 and Comparative Examples 1 to 5.
FIG. 5 is a graph showing a correlation between the electrolytes having each solvent component and cycle-life characteristic in Example 1, Reference Examples 1 to 7 and Comparative Examples 1 to 5.
FIG. 6 is a graph showing a correlation between the EC contents and 45°C cycle-life characteristics in Example 1, Reference Examples 1 to 7 and Comparative Examples 1 to 5.
FIG. 7 is a graph showing the electrolyte solution design of a rechargeable lithium battery including a positive active material having a NCM composition including 75% of Ni depending on a solvent composition.
FIG. 8 is a contour plot mapping 45°C cycle-life characteristics depending on solvent composition of the electrolytes according to Example 2, Reference Examples 8 to 16 and Comparative Examples 7 to 9.
FIG. 9 is a graph showing a correlation between the EC contents and 45°C cycle-life characteristics in Example 2, Reference Examples 8 to 16 and Comparative Examples 7 to 9.
FIG. 10 is a graph showing a correlation between the EC contents and 45°C cycle-life characteristics in Comparative Examples 10 to 12.
FIG. 11 is a graph showing a correlation between NCM composition and 45°C cycle-life characteristic depending on EC content.

**<Description of Symbols>**

| | | | |
|---|---|---|---|
| 100: | rechargeable lithium battery | | |
| 112: | negative electrode | | |
| 113: | separator | | |
| 114: | positive electrode | | |
| 120: | battery case | | |
| 140: | sealing member | | |
| 101: | rechargeable battery | 35: | connecting plate |
| 21: | positive terminal | 38: | sealing cap |
| 22: | negative terminal | 39: | vent member |
| 25: | gasket | 39a: | notch |
| 29: | nut | | |
| 30: | cap plate | | |
| 34: | case | | |

### DETAILED DESCRIPTION OF THE EMBODIMENTS

Embodiments will hereinafter be described in the detailed description. However, this disclosure is not limited thereto.

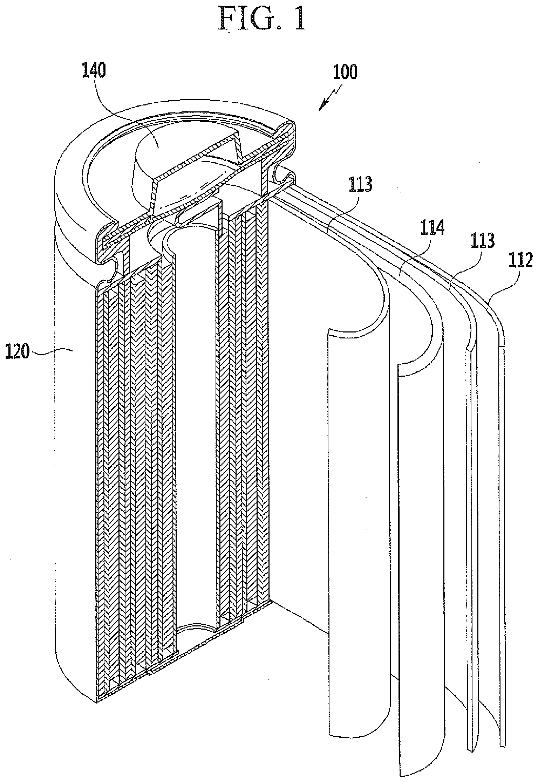

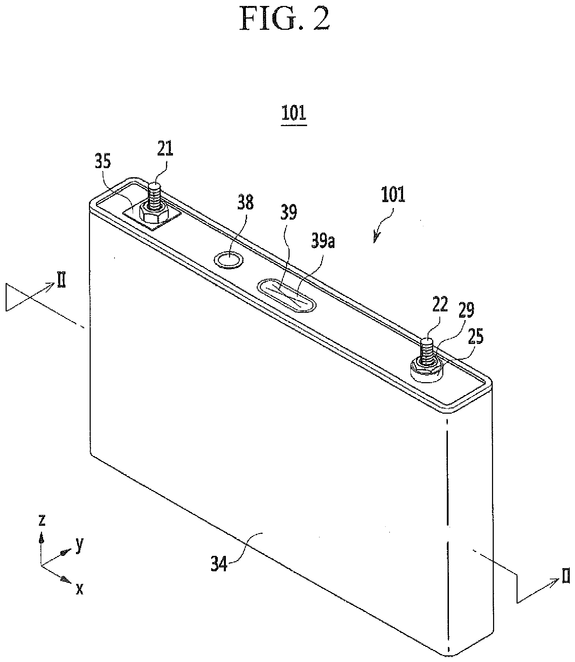

A rechargeable lithium battery according to one embodiment is described referring to FIG. 1 and FIG. 2.

FIG. 1 is a schematic view showing a rechargeable lithium battery according to one embodiment.

Referring to FIG. 1, the rechargeable lithium battery 100 according to one embodiment includes an electrode assembly including a positive electrode 114, a negative electrode 112 facing the positive electrode 114, a separator 113 interposed between the positive electrode 114 and negative electrode 112, and an electrolyte (not shown) impregnated in the positive electrode 114, negative electrode 112, and separator 113, a battery case 120 including the electrode assembly, and a sealing member 140 sealing the battery case 120.

The positive electrode 114 includes a current collector and a positive active material layer formed on the current collector. The positive active material layer includes a positive active material, a binder, and optionally a conductive material.

The current collector may be Al but is not limited thereto.

FIG. 2 is a schematic view showing PHEV prismatic cell according to one embodiment.

A positive active material according to one embodiment includes a nickel-based composite oxide represented by the following Chemical Formula 1.

[Chemical Formula 1] LiNiₓCo_{y}Mn_{z}O₂

In the above Chemical Formula 1, 0.65≤x≤0.85, 0.05<y<0.25, 0.03<z <0.2, and x+y+z=1.

In an embodiment of the present invention, in Chemical Formula 1, 0.07<y<0.24, optionally 0.08<y≤0.22, optionally 0.10≤y≤0.20.

In an embodiment of the present invention, in Chemical Formula 1, 0.04<z<0.18, optionally 0.05<z≤0.16, optionally 0.05≤z≤0.15.

When the nickel is included within the range, an active material may realize specific capacity of greater than or equal to 170 mAh/g, and the active material having high specific capacity may be used to design a battery having low current density and thus, improve cycle-life characteristic, output characteristic, rate capability, and the like of the battery. In particular, when the nickel is included out of the range, the active material may realize specific capacity of 170mAh/g and thus, is not adventurous in terms of cycle-life characteristic, output characteristic, rate capability, and the like. In addition, when NCM including nickel in an amount of greater than 85% is used, the amount of lithium remaining in a battery is increased and generates more gas and thus, deteriorates thermal stability.

More specifically, in the nickel-based composite oxide represented by the above Chemical Formula 1, x:y:z may preferably be 0.65:0.20:0.15, 0.75:0.10:0.15, or 0.85:0.10:0.05.

As nickel is more included in the nickel-based composite oxide included in the positive active material, a rechargeable lithium battery having high-capacity may be realized. Specifically, a Co-Ni-Mn three component-based oxide including 60% of Ni may realize capacity of greater than or equal to 170 mAh/g, a Co-Ni-Mn three component-based oxide including 70% of Ni may realize capacity of greater than or equal to 180 mAh/g, and a Co-Ni-Mn three component-based oxide including 80% of Ni may realize capacity of greater than or equal to 190 mAh/g.

In the above Chemical Formula 1, a Co-Ni-Mn three component-based oxide having x of greater than 0.6 may realize a rechargeable lithium battery having high-capacity of greater than 60%. Examples of the high-capacity nickel-based composite oxide may specifically include LiNi₆₅CO₂₀Mn₁₅, LiNi₇₅CO₁₀Mn₁₅, or LiNi₈₅CO₁₀Mn₅.

The binder improves binding properties of the positive active material particles to each other and to a current collector. Examples of the binder may include polyvinylalcohol, carboxylmethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, epoxy resin, nylon, and the like, but are not limited thereto.

The conductive material improves electrical conductivity of a negative electrode. Any electrically conductive material can be used as a conductive agent unless it causes a chemical change. Examples of the conductive material include one or more of natural graphite, artificial graphite, carbon black, acetylene black, ketjen black, a carbon fiber, a metal powder or a metal fiber of copper, nickel, aluminum, silver, and the like, a polyphenylene derivative, and the like.

The electrolyte includes a non-aqueous organic solvent and a lithium salt.

The non-aqueous organic solvent plays a role of transferring ions taking part in the electrochemical reaction of a battery.

The non-aqueous organic solvent according to the present invention includes ethylene carbonate.

The ethylene carbonate is included in an amount of 10 volume% based on the total weight of a non-aqueous organic solvent.

When the ethylene carbonate is included in this amount, deterioration of a battery may be eased, and thus, stability of the battery may be improved.

The non-aqueous organic solvent further includes dimethyl carbonate (DMC) and ethylmethyl carbonate (EMC). The electrolyte including these mixed organic solvents may realize excellent thermal safety and high temperature cycle life characteristic as well as high-capacity of a rechargeable lithium battery.

When the organic solvent is used in a mixture, its mixture ratio can be controlled in accordance with desirable performance of a battery.

In the present invention, the electrolyte consists of ethylene carbonate, dimethyl carbonate and ethylmethyl carbonate.

The total content of ethylene carbonate, dimethyl carbonate and ethylmethyl carbonate equals 100 volume% based on the total amount of the non-aqueous organic solvent.

In the present invention the amount of dimethyl carbonate or ethylmethyl carbonate is 45 volume% based on the total amount of the non-aqueous organic solvent.

The lithium salt is dissolved in the non-aqueous solvent and supplies lithium ions in a rechargeable lithium battery, and basically operates the rechargeable lithium battery and improves lithium ion transfer between positive and negative electrodes.

Examples of the lithium salt may be LiPF₆, LiBF₄, LiSbF₆, LiAsF₆, LiN (SO₃C₂F₅)₂, LiC₄F₉SO₃, LiClO₄, LiAlO₂, LiAlCl₄, LiN(CₓF₂ₓ₊₁SO₂)(C_{y}F_{2y+1}SO₂) (wherein, x and y are natural numbers), LiCl, Lil, LiB(C₂O₄)₂ (lithium bis(oxalato) borate, LiBOB), or a combination thereof.

The lithium salt may be used in a concentration of about 0.1M to about 2.0M. When the lithium salt is included within the above concentration range, it may electrolyte performance and lithium ion mobility due to optimal electrolyte conductivity and viscosity.

The negative electrode 112 includes a negative current collector and a negative active material layer formed on the negative current collector.

The negative current collector may be a copper foil.

The negative active material layer includes a negative active material, a binder, and optionally a conductive material.

The negative active material includes a material that reversibly intercalates/deintercalates lithium ions, a lithium metal, a lithium metal alloy, a material being capable of doping lithium, or a transition metal oxide.

The material that reversibly intercalates/deintercalates lithium ions includes carbon materials. The carbon material may be any generally-used carbon-based negative active material in a lithium ion secondary battery. Examples of the carbon material include crystalline carbon, amorphous carbon, and a combination thereof. The crystalline carbon may be non-shaped, or sheet, flake, spherical, or fiber shaped natural graphite or artificial graphite. The amorphous carbon may be a soft carbon (carbon obtained by sintering at a low temperature), a hard carbon, a mesophase pitch carbonized product, fired coke, and the like.

The lithium metal alloy may include lithium and a metal selected from Na, K, Rb, Cs, Fr, Be, Mg, Ca, Sr, Si, Sb, Pb, In, Zn, Ba, Ra, Ge, Al, and Sn.

The material being capable of doping and dedoping lithium include Si, SiOx (0 < x < 2), a Si-C composite, a Si-Q alloy (wherein Q is an alkali metal, an alkaline-earth metal, Group 13 to 16 elements, a transition element, a rare earth element, or a combination thereof, and not Si), Sn, SnO₂, a Sn-C composite, Sn-R (wherein R is an alkali metal, an alkaline-earth metal, Group 13 to 16 elements, a transition element, a rare earth element, or a combination thereof, not Sn), and the like. At least one of them may be mixed with SiO₂. The elements Q and R may be selected from Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, Te, Po, or a combination thereof.

The transition metal oxide may include vanadium oxide, lithium vanadium oxide, and the like.

The binder improves binding properties of the negative active material particles to each other and to a current collector. Examples of the binder may include polyvinylalcohol, carboxylmethyl cellulose, hydroxypropyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like, but are not limited thereto.

The conductive material improves electrical conductivity of a negative electrode. Any electrically conductive material can be used as a conductive agent unless it causes a chemical change. Examples of the conductive material include a carbon-based material such as natural graphite, artificial graphite, carbon black, acetylene black, ketjen black, a carbon fiber, and the like; a metal-based material of a metal powder or a metal fiber including copper, nickel, aluminum, silver, and the like; a conductive polymer such as a polyphenylene; or a mixture thereof.

The negative electrode 112 and positive electrode 114 may be manufactured in a method of preparing an active material composition by mixing each active material, a conductive material, and a binder and coating the composition on a current collector.

The electrode manufacturing method is well known and thus, is not described in detail in the present specification. The solvent includes N-methylpyrrolidone and the like but is not limited thereto.

The separator 113 may include any materials commonly used in the conventional lithium battery as long as separating a negative electrode 112 from a positive electrode 114 and providing a transporting passage for lithium ions. In other words, the separator 113 may be made of a material having a low resistance to ion transportation and an improved impregnation for an electrolyte. For example, the material may be selected from glass fiber, polyester, TEFLON (tetrafluoroethylene), polyethylene, polypropylene, polytetrafluoroethylene (PTFE), or a combination thereof. It may have a form of a non-woven fabric or a woven fabric. For example, a polyolefin-based polymer separator such as polyethylene, polypropylene or the like is mainly used for a lithium ion battery. In order to ensure the heat resistance or mechanical strength, a coated separator including a ceramic component or a polymer material may be used. Selectively, it may have a mono-layered or multi-layered structure.

Hereinafter, the embodiments are illustrated in more detail with reference to examples. However, the following are exemplary embodiments and are not limiting.

Furthermore, what is not described in this disclosure may be sufficiently understood by those who have knowledge in this field and will not be illustrated here.

### (Preparation of Electrolyte)

Example 1, Reference Examples 1 to 7 and Comparative Examples 1 to 6

Each electrolyte according to Example 1, Reference Examples 1 to 7 and Comparative Examples 1 to 6 has a composition provided in the following Table 1. EC indicates ethylene carbonate, DMC indicates dimethyl carbonate, and EMC indicates ethyl methyl carbonate.

**[Table 1]**

| | EC (vol.%) | DMC (vol.%) | EMC (vol.%) |
|---|---|---|---|
| Reference Example 1 | 10 | 0 | 90 |
| Reference Example 2 | 10 | 90 | 0 |
| Example 1 | 10 | 45 | 45 |
| Reference Example 3 | 25 | 0 | 75 |
| Reference Example 4 | 25 | 75 | 0 |
| Reference Example 5 | 25 | 37.5 | 37.5 |
| Reference Example 6 | 17.5 | 18.8 | 63.8 |
| Reference Example 7 | 17.5 | 63.8 | 18.8 |
| Comparative Example 1 | 40 | 0 | 60 |
| Comparative Example 2 | 40 | 60 | 0 |
| Comparative Example 3 | 40 | 30 | 30 |
| Comparative Example 4 | 32.5 | 18.8 | 48.8 |
| Comparative Example 5 | 32.5 | 48.8 | 18.8 |
| Comparative Example 6 | 30 | 40 | 30 |

| | | | |
|---|---|---|---|
| Li salt: 1.3M LiPF₆, No additive. | | | |

### Example 2, Reference Examples 8 to 16 and Comparative Examples 7 to 9

Each electrolyte according to Example 2, Reference Examples 8 to 16 and Comparative Examples 7 to 9 has a composition provided in the following Table 2.

**[Table 2]**

| | EC (vol.%) | EMC (vol.%) | DMC (vol.%) |
|---|---|---|---|
| Reference Example 8 | 10 | 0 | 90 |
| Reference Example 9 | 10 | 90 | 0 |
| Example 2 | 10 | 45 | 45 |
| Reference Example 10 | 20 | 0 | 80 |
| Reference Example 11 | 20 | 80 | 0 |
| Reference Example 12 | 20 | 40 | 40 |
| Reference Example 13 | 15 | 20 | 65 |
| Reference Example 14 | 25 | 20 | 55 |
| Reference Example 15 | 15 | 65 | 20 |
| Reference Example 16 | 25 | 55 | 20 |
| Comparative Example 7 | 30 | 0 | 70 |
| Comparative Example 8 | 30 | 35 | 35 |
| Comparative Example 9 | 30 | 40 | 30 |

### Comparative Examples 10 to 12

Each electrolyte according to Comparative Examples 10 to 12 has a composition provided in the following Table 3.

**[Table 3]**

| | EC (vol.%) | EMC (vol.%) | DMC (vol.%) |
|---|---|---|---|
| Comparative Example 10 | 10 | 45 | 45 |
| Comparative Example 11 | 20 | 40 | 40 |
| Comparative Example 12 | 30 | 40 | 30 |

### Example 3 and Comparative Example 13

Each electrolyte according to Example 3 and Comparative Example 13 has a composition provided in the following Table 4.

**[Table 4]**

| | EC (vol.%) | EMC (vol.%) | DMC (vol.%) |
|---|---|---|---|
| Example 3 | 10 | 45 | 45 |
| Comparative Example 13 | 30 | 40 | 30 |

### (Manufacture of Rechargeable Lithium Battery Cell)

### Example 1, Reference Examples 1 to 7 and Comparative Examples 1 to 6: Case of including 75% of Ni

NCM having a composition ratio of LiNi₇₅Co₁₀Mn₁₅ was used as a positive active material made by Toda Material Corp.

The positive active material was mixed with polyvinylidene fluoride (PVDF) and denkablack in a weight ratio of 92: 4 : 4 in a N-methylpyrrolidone solvent, preparing positive active material slurry. The positive active material slurry was uniformly coated on a 12 µm-thick aluminum current collector and then, dried and compressed, fabricating a positive electrode.

Negative active material slurry was prepared by mixing artificial graphite as a negative active material, a binder, and a thickener in a weight ratio of 97.5: 1.5: 1 in a water solvent. The negative active material slurry was coated on a copper current collector and then, dried and compressed, fabricating a negative electrode.

The positive and negative electrodes, each electrolyte according to Example 1, Reference Examples 1 to 7 and Comparative Examples 1 to 6, and a separator of polypropylene/polyethylene/polypropylene were used to manufacture a rechargeable lithium battery cell having capacity of 230mAh and a size of 18650 according to Example 1, Reference Examples 1 to 7 and Comparative Examples 1 to 6.

### Example 2, Reference Examples 8 to 16 and Comparative Examples 7 to 9: Case of including 65% of Ni

A positive active material was prepared as follows.

### (Preparation of Positive Active Material)

NiSO₄, COSO₄, and MnSO₄ powder were respectively mixed in a mole ratio of 65:20:15 to prepare a 2.4M aqueous solution, and a 7.5M NaOH aqueous solution and a 15M NH₄OH aqueous solution were added thereto and consecutively mixed in a co-precipitator. The mixture was co-precipitated for 8 hours at pH 11-12.5, a temperature of 40°C, and a speed of 700rpm, obtaining a (Ni_{0.65}Co_{0.20}Mn_{0.15})OH₂ precursor. The precursor was washed, dried in a 120°C oven, and filtered and then, mixed with Li₂CO₃ in a mole ratio of about 1:1 with a hand mixer. The obtained mixture was put in a firing container and fired at a speed of 2°C/min at a temperature of 750-900°C for about 10 hours, preparing a nickel-based composite oxide, LiNi_{0.65}Co_{0.20}Mn_{0.15}O₂ as a positive active material.

Then, rechargeable lithium battery cells according to Example 2, Reference Examples 8 to 16 and Comparative Examples 7 to 9 were manufactured according to the same method as Example 1, Reference Examples 1 to 7 and Comparative Examples 1 to 6 except for using each electrolyte according to Example 2, Reference Examples 8 to 16 and Comparative Examples 7 to 9.

### Comparative Example 10 to 12: Case of including 60% of Ni

Rechargeable lithium battery cells according to Comparative Examples 10 to 12 were manufactured according to the same method as Example 1, Reference Examples 1 to 7 and Comparative Examples 1 to 6 except for using NCM having a composition ratio of Ni₆₀Co₂₀Mn₂₀ and made by Umicore Corp. as a positive active material and respectively using the electrolytes having the compositions in Table 3 according to Comparative Examples 10 to 12.

### Example 3 and Comparative Example 13: Case of including 85% of Ni

Rechargeable lithium battery cells according to Example 3 and Comparative Example 13 were manufactured according to the same method as Example 1, Reference Examples 1 to 7 and Comparative Examples 1 to 6 except for using NCM having a composition ratio of Ni₈₅Co₁₀Mn₅ and made by Ecopro Corp. as a positive active material and each electrolyte having the composition in Table 3 according to Example 3 and Comparative Example 13.

### Evaluation 1: 45°C Cycle-life Characteristic Evaluation Depending on Solvent Composition

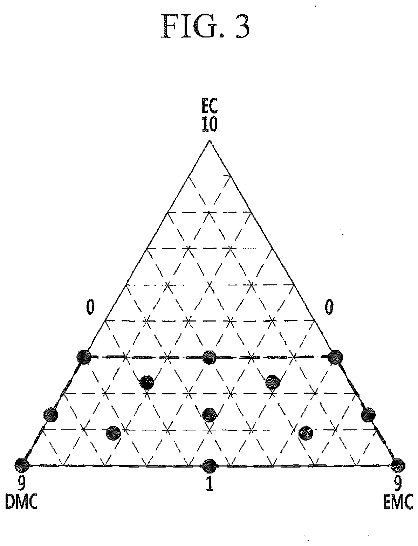

Each rechargeable lithium battery cell according to Examples 1 to 3, Reference Examples 1 to 16 and Comparative Examples 1 to 13 were charged and discharged at 45°C under a condition of 1C/1C condition. After 300 times repeating his charge and discharge, the rechargeable lithium battery cells were measured regarding capacity retention depending on a cycle at a high temperature to evaluate cycle-life characteristic, and the results are provided in the following Tables 5 to 7 and FIGS. 3 to 6.

### (Example 1, Reference Examples 1 to 7 and Comparative Examples 1 to 5)

The rechargeable lithium battery cells according to Example 1, Reference Examples 1 to 7 and Comparative Examples 1 to 5 were evaluated regarding 45°C cycle-life characteristic, and the results are provided in the following Table 5 and FIGS. 3 to 6.

**[Table 5]**

| | 45°C cycle capacity retention (%) |
|---|---|
| Reference Example 1 | 86.31 |
| Reference Example 2 | 88.66 |
| Example 1 | 90.19 |
| Reference Example 4 | 89.59 |
| Reference Example 5 | 88.93 |
| Reference Example 6 | 86.29 |
| Reference Example 7 | 88.13 |
| Reference Example 8 | 87.52 |
| Comparative Example 1 | 39.54 |
| Comparative Example 2 | 28.57 |
| Comparative Example 3 | 38.37 |
| Comparative Example 4 | 80.2 |
| Comparative Example 5 | 70.95 |

| | |
|---|---|
| * Li salt: 1.3M LiPF₆, no additive. | |

FIG. 3 is a graph showing the electrolytes according to Example 1, Reference Examples 1 to 7 and Comparative Examples 1 to 5 depending on each solvent composition.

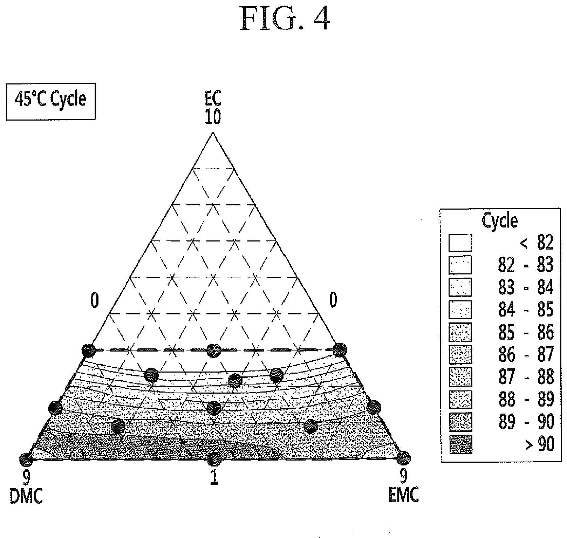

FIG. 4 is a contour plot mapping 45°C cycle-life characteristics of the electrolytes according to Example 1, Reference Examples 1 to 7 and Comparative Examples 1 to 5 depending on each solvent composition.

Referring to FIGS. 3 and 4, the rechargeable lithium battery cells including the electrolytes including EC in an amount of less than or equal to 25 volume% according to Example 1 and Reference Examples 1 to 7 showed better high temperature cycle-life characteristics than the rechargeable lithium battery cells including the electrolytes including EC in an amount of greater than 30 volume% according to Comparative Examples 1 to 5.

In particular, referring to FIG. 4, when EC was included in an amount of less than to 25 volume%, DMC in an amount of greater than or equal to 37.5 volume%, and EMC in an amount of less than or equal to 62.5 volume%, excellent high temperature cycle-life characteristic was accomplished. In more particular, when EC:DMC:EMC had a composition of 30:40:30 volume%, 93.2% of initial capacity and 86.5% of 45°C cycle capacity retention were obtained.

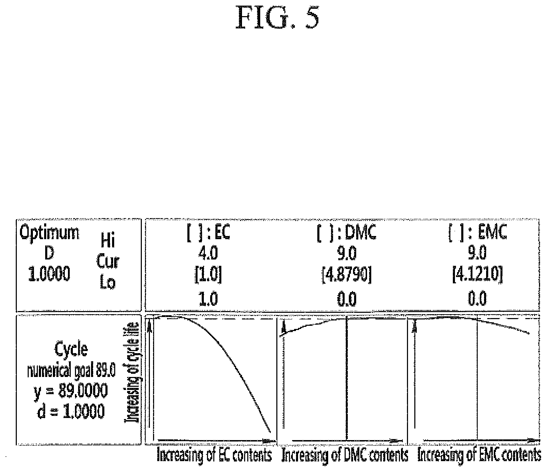

FIG. 5 is a graph showing a correlation between each solvent component included in the electrolytes according to Example 1, Reference Examples 1 to 7 and Comparative Examples 1 to 5 and cycle-life characteristics.

Referring to FIG. 5, when EC was included in greater than or equal to a predetermined content, cycle-life was sharply deteriorated, and in addition, as DMC was more included, cycle-life characteristics were increased, but when the DMC was included in greater than or equal to a predetermined content, the cycle-life characteristics were saturated.

Likewise, as the EMC was less included, cycle-life characteristics were increased, but when included in greater than or equal to a predetermined content, the cycle-life characteristics were saturated.

However, the cycle-life characteristics change was vastly determined by the content of the EC than the contents of the DMC and EMC.

FIG. 5 shows a correlation between 45°C cycle-life characteristics and the content of the EC.

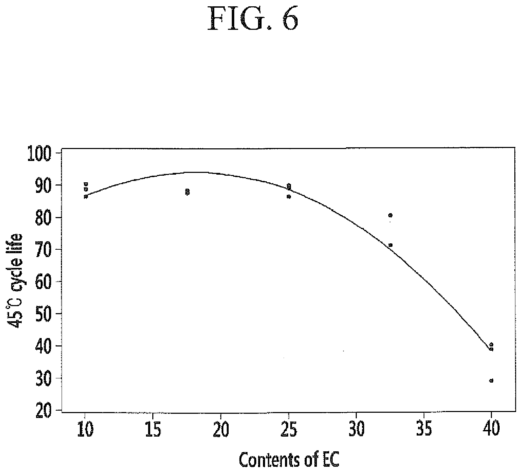

FIG. 6 shows a graph between the content of the EC in Example 1, Reference Examples 1 to 7 and Comparative Examples 1 to 5 and 45°C cycle-life characteristics.

Referring to FIG. 6, when the EC was included in greater than or equal to a predetermined content (25 volume%), high temperature cycle-life characteristics were sharply deteriorated.

### (Example 2, Reference Examples 8 to 16 and Comparative Examples 7 to 9)

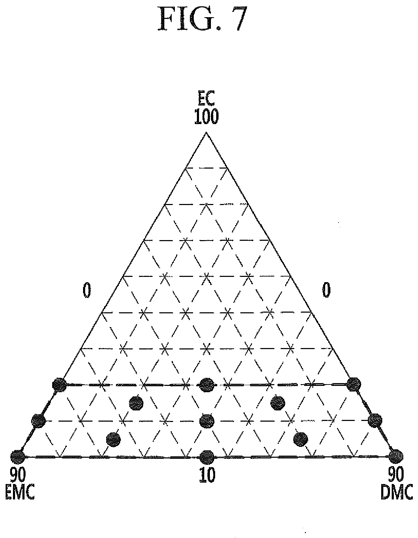

The rechargeable lithium battery cells according to Example 2, Reference Examples 8 to 16 and Comparative Examples 7 to 9 were evaluated regarding 45°C cycle-life characteristics, and the results are provided in the following Table 6 and FIGS. 7 to 9.

**[Table 6]**

| | 45°C cycle capacity retention(%) |
|---|---|
| Reference Example 8 | 92.4 |
| Reference Example 9 | 89.0 |
| Example 2 | 91.9 |
| Reference Example 10 | 93.0 |
| Reference Example 11 | 91.0 |
| Reference Example 12 | 92.8 |
| Reference Example 13 | 91.4 |
| Reference Example 14 | 92.2 |
| Reference Example 15 | 92.5 |
| Reference Example 16 | 91.8 |
| Comparative Example 7 | 81.3 |
| Comparative Example 8 | 86.0 |
| Comparative Example 9 | 87.2 |

| | |
|---|---|
| * Li salt: 1.3M LiPF₆, no additive. | |

FIG. 7 is a graph showing an electrolyte solution design depending on each solvent composition in the rechargeable lithium battery cells including a positive active material having a NCM composition including 75% of Ni.

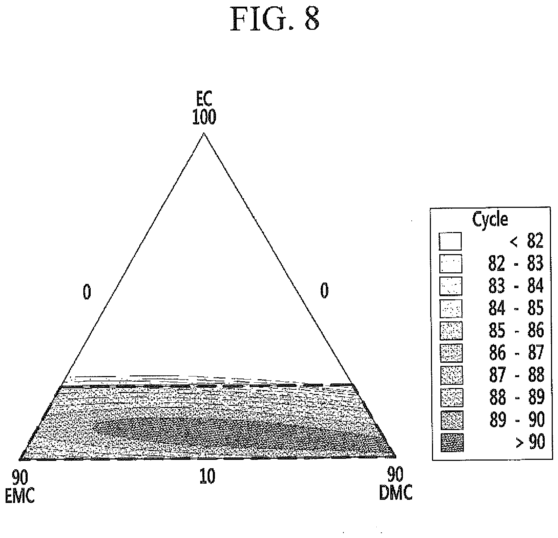

FIG. 8 is a contour plot mapping 45°C cycle-life characteristics depending on each solvent composition according to Example 2, Reference Examples 8 to 16 and Comparative Examples 7 to 9.

Referring to FIG. 8, the rechargeable lithium battery cells including an electrolyte including EC in an amount of less than or equal to 25 volume% according to Example 2, Reference Examples 8 to 16 showed better high temperature cycle-life characteristics than the rechargeable lithium battery cells including an electrolyte including EC in an amount of greater than 30 volume% according to Comparative Examples 7 to 9.

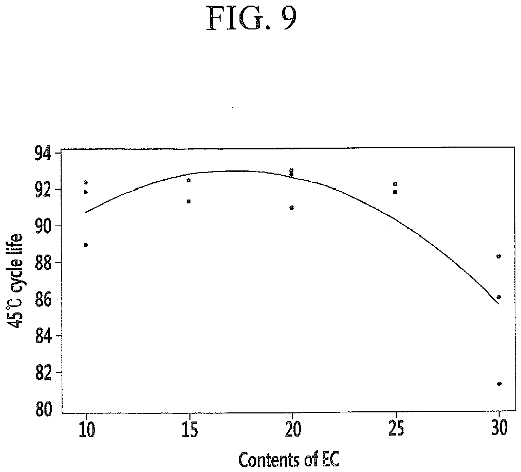

FIG. 9 is a graph showing a correlation between the content of EC and 45°C cycle-life characteristics in Example 2, Reference Examples 8 to 16 and Comparative Examples 7 to 9.

Referring to FIG. 9, when the EC was included in greater than a predetermined content (25 volume%), high temperature cycle-life characteristics were sharply deteriorated.

### (Comparative Examples 10 to 12)

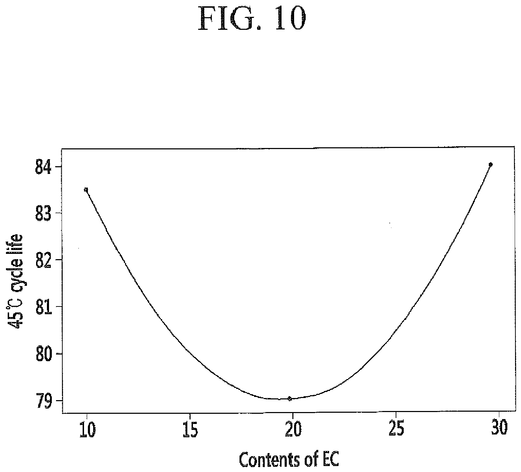

The rechargeable lithium battery cells according to Comparative Examples 10 to 12 were evaluated regarding 45°C cycle-life characteristics, and the results are provided in the following Table 7 and FIG. 10.

**[Table 7]**

| | 45°C cycle capacity retention (%) |
|---|---|
| Comparative Example 10 | 83.5 |
| Comparative Example 11 | 79.0 |
| Comparative Example 12 | 84.0 |

| | |
|---|---|
| * Li salt: 1.3M LiPF₆, no additive. | |

FIG. 10 is a graph showing a correlation between the EC contents and 45°C cycle-life characteristics in Comparative Examples 10 to 12.

Referring to FIG. 10, the EC content tended to have a different 45°C cycle-life characteristics from 65% or 75% of Ni, and in particular, when the EC was included in an amount of 30 volume%, relatively excellent cycle-life characteristics were obtained opposite to 65% or 75% of the Ni.

### Evaluation 2: 45°C Cycle-life characteristics Evaluation Depending on NCM Positive Active Material Composition

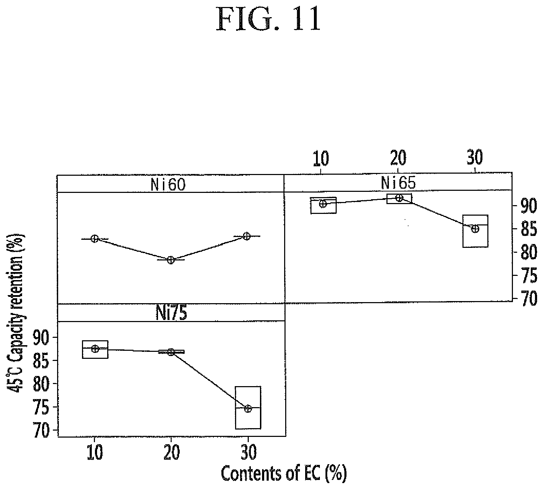

FIG. 11 shows a correlation between 45°C cycle-life characteristics of the rechargeable lithium battery cells according to Examples 1 to 3, Reference Examples 1 to 16 and Comparative Examples 1 to 12 and EC content according to a NCM positive active material composition.

FIG. 11 is a graph showing a correlation between NCM composition and 45°C cycle-life characteristics depending on EC contents.

Referring to FIG. 11, when Ni was included in an amount of greater than or equal to 65% in a NCM positive active material composition, 45°C cycle-life characteristics were sharply deteriorated with greater than or equal to 20% of EC.

### Evaluation 3: Gas Generation Amount after Allowed Standing at High Temperature

The rechargeable lithium battery cells according to Example 1 and Comparative Example 6 were charged at 4.2V, allowed to stand at 60°C for 10 days, and measured about the gas generation amount, and the results are provided in the following Table 8.

**[Table 8]**

| | Gas generation amount (ml) |
|---|---|
| Example 1 | 0.9 |
| Comparative Example 6 | 1.3 |

Referring to Table 8, the rechargeable lithium battery cell according to Comparative Example 6 showed higher gas generation amount than that of the rechargeable lithium battery cell according to Example 3.

### Evaluation 4: Output Maintenance Ratio

Prismatic large-sized cells depending on a positive electrode material according to Examples 1 to 3, Comparative Examples 6, 9, and 13 were adjusted about state of charge (SOC:) into 50% and discharged at 25°C for 10 seconds with a current of 1C, 3C, and 5C and then, measured regarding voltage when it reached 10 seconds. A difference between an initial voltage and a voltage at the 10 seconds based on the currents was calculated and then, used to obtain DC internal resistance, and an output based on the DC internal resistance was provided in the following Table 9.

An output maintenance ratio (%) was a percentage of capacity after an cycle based on initial capacity.

**[Table 9]**

| | Positive active material | 45°C cycle number | 45°C cycle capacity retention (%) | 45°C cycle output maintenance ratio (%) | Vent |
|---|---|---|---|---|---|
| Example 1 | LiNi₇₅Co₁₀Mn₁₅ | 400 | 93.6 | 85.4 | Not open |
| Comparative Example6 | | 327 | 83.2 | 69.1 | open |
| Example 2 | LiNi₆₅Co₂₀Mn₁₅ | 323 | 89 | 91.6 | Not open |
| Comparative Example9 | | 229 | 80 | 84.2 | Not open |
| Example 3 | LiNi₈₅Co₁₀Mn₅ | 300 | 92.4 | 79.5 | Not open |
| Comparative Example13 | | 170 | 97.8 | 49.8 | open |

Referring to Table 9, the rechargeable lithium battery cells according to Examples 1 to 3 showed excellent cycle capacity retention, cycle output maintenance ratio and also, no open vent (NOT OPEN) and thus, less gas generation than the rechargeable lithium battery cells according to Comparative Examples 6, 9, and 13. In other words, EC in an amount of less than or equal to 25% showed an adventurous effect compared with EC in an amount of greater than 30%.

While this invention has been described in connection with what is presently considered to be practical exemplary embodiments, it is to be understood that the invention is not limited to the disclosed embodiments, but, on the contrary, is intended to cover various modifications and equivalent arrangements included within the scope of the appended claims.

## Claims

1. A rechargeable lithium battery that includes a positive electrode including a positive active material, and an electrolyte including a lithium salt and a non-aqueous organic solvent, wherein the positive active material includes a nickel-based composite oxide represented by the following Chemical Formula 1, and **characterized in that** the non-aqueous organic solvent consists of ethylene carbonate, dimethyl carbonate and ethylmethyl carbonate, wherein the ethylene carbonate is included in an amount of 10 volume% based on the total amount of the non-aqueous organic solvent, the dimethyl carbonate is included in an amount of 45 volume% based on the total amount of the non-aqueous organic solvent, and the ethylmethyl carbonate is included in an amount of 45 volume% based on the total amount of the non-aqueous organic solvent
[Chemical Formula 1] LiNixCoyMnzO₂
in the above Chemical Formula 1, 0.65≤x≤0.85, 0.05<y<0.25, 0.03<z<0.2, and x+y+z=1.

2. The battery of claim 1, where in Chemical Formula 1, 0.07<y<0.24, optionally 0.08<y≤0.22, optionally 0.10≤y≤0.20.

3. The battery of any of claims 1 to 2, where in Chemical Formula 1, 0.04<z<0.18, optionally 0.05<z≤0.16, optionally 0.05≤z≤0.15.

4. The battery of any of claims 1 to 3, wherein in Chemical Formula 1, x:y:z is 0.65:0.20:0.15, 0.75:0.10:0.15, or 0.85:0.10:0.05.

## Patentansprüche

1. Wiederaufladbare Lithiumbatterie, die eine positive Elektrode, umfassend ein positives Aktivmaterial, und einen Elektrolyten, umfassend ein Lithiumsalz und ein nichtwässriges organisches Lösungsmittel, umfasst, wobei das positive Aktivmaterial ein Mischoxid auf Nickelbasis, dargestellt durch die folgende chemische Formel 1, umfasst, und **dadurch gekennzeichnet, dass** das nichtwässrige organische Lösungsmittel aus Ethylencarbonat, Dimethylcarbonat und Ethylmethylcarbonat besteht, wobei Ethylencarbonat in einer Menge von 10 Vol.-%, bezogen auf die Gesamtmenge des nichtwässrigen organischen Lösungsmittels, Dimethylcarbonat in einer Menge von 45 Vol.-%, bezogen auf die Gesamtmenge des nichtwässrigen organischen Lösungsmittels, und Ethylmethylcarbonat in einer Menge von 45 Vol.-%, bezogen auf die Gesamtmenge des nichtwässrigen organischen Lösungsmittels, enthalten ist,
[Chemische Formel 1] LiNiₓCo_{y}Mn_{z}O₂
in der vorstehenden chemischen Formel 1, 0,65≤x≤0,85, 0,05 < y < 0,25, 0,03 < z < 0,2 und x + y + z = 1.

2. Batterie nach Anspruch 1, wobei, in der chemischen Formel 1, 0,07 < y < 0,24, gegebenenfalls 0,08< y ≤ 0,22, gegebenenfalls 0,10 ≤ y ≤ 0,20.

3. Batterie nach einem der Ansprüche 1 bis 2, wobei, in der chemischen Formel 1, 0,04 < z < 0,18, gegebenenfalls 0,05 < z ≤ 0,16, gegebenenfalls 0,05 ≤ z ≤ 0,15.

4. Batterie nach einem der Ansprüche 1 bis 3, wobei, in der chemischen Formel 1, x:y:z 0,65:0,20:0,15, 0,75:0,10:0,15 oder 0,85:0,10:0,05 entspricht.

## Revendications

1. Batterie au lithium rechargeable qui comprend une électrode positive comprenant un matériau actif positif, et un électrolyte comprenant un sel de lithium et un solvant organique non aqueux, dans laquelle le matériau actif positif comprend un oxyde composite à base de nickel représenté par la Formule Chimique 1 suivante, et **caractérisée en ce que** le solvant organique non aqueux est constitué de carbonate d'éthylène, de carbonate de diméthyle et de carbonate d'éthylméthyle, le carbonate d'éthylène étant inclus en une quantité de 10 % en volume sur la base de la quantité totale du solvant organique non aqueux, le carbonate de diméthyle étant inclus en une quantité de 45 % en volume sur la base de la quantité totale du solvant organique non aqueux, et le carbonate d'éthylméthyle étant inclus en une quantité de 45 % en volume sur la base de la quantité totale du solvant organique non aqueux,
[Formule Chimique 1] LiNixCoyMnzO₂
dans la Formule Chimique 1 ci-dessus, 0,65 ≤ x ≤ 0,85, 0,05 ≤ y ≤ 0,25, 0,03 ≤ z ≤ 0,2 et x + y + z = 1.

2. Batterie selon la revendication 1, où, dans la Formule Chimique 1, 0,07 ≤ y ≤ 0,24, facultativement 0,08 ≤ y ≤ 0,22, facultativement 0,10 ≤ y ≤ 0,20.

3. Batterie selon l'une quelconque des revendications 1 et 2, où, dans la Formule Chimique 1, 0,04 ≤ z ≤ 0,18, facultativement 0,05 ≤ z ≤ 0,16, facultativement 0,05 ≤ z ≤ 0,15.

4. Batterie selon l'une quelconque des revendications 1 à 3, où, dans la Formule Chimique 1, x:y:z est égal à 0,65:0,20:0,15, 0,75:0,10:0,15, ou 0,85:0,10:0,05.
